# EUROPEAN PATENT SPECIFICATION

(11) **EP 3 216 580 B1**
(45) Date of publication and mention of the grant of the patent: **13.05.2020**
(21) Application number: 17159446.8
(22) Date of filing: 06.03.2017
(51) Int. Cl.: B29C 44/50, F16L 11/08, F16L 11/10, B29L 23/00, B29K 27/06

(54) **METHOD FOR MAKING A LIGHT PLASTIC MATERIAL TUBE STRUCTURE, FOR BUILDING, INDUSTRIAL AND AGRICULTURAL APPLICATIONS, AND LIGHT PLASTIC MATERIAL TUBE STRUCTURE THUS MADE**
VERFAHREN ZUR HERSTELLUNG EINER LEICHTKUNSTSTOFF-ROHRSTRUKTUR FÜR BAU, INDUSTRIE UND LANDWIRTSCHAFTSANWENDUNGEN, SOWIE LEICHTKUNSTSTOFF-ROHRSTUKTUR
PROCÉDÉ DE PRODUCTION D'UNE STRUCTURE DE TUBE EN PLASTIQUE LÉGER, POUR CONSTRUCTION, INDUSTRIE ET AGRICULTURE, ET STRUCTURE DE TUBE EN PLASTIQUE LÉGER

(30) Priority: 08.03.2016 IT UA20161459
(43) Date of publication of application: 13.09.2017
(73) Proprietor: Merlett Tecnoplastic S.p.A., 21020 Daverio (VA) (IT)
(72) Inventor: TAMBORINI, Marco, 21020 Daverio (VA) (IT)
(74) Representative: Rastelli, Franco

(56) References cited:
- EP-A2- 1 108 937
- WO-A2-01/04530
- GB-A- 1 438 322
- JP-A- 2010 216 623
- US-A- 4 343 672
- US-A1- 2008 041 483

## Description

### BACKGROUND OF THE INVENTION

The present invention relates, according to a first aspect thereof, to a method for making a lightweight plastic tube structure, in particular for construction sites.

According to a second aspect thereof, the invention relates to the lightweight tube structure made by using the method according to the invention.

The Applicant has been producing for some years now, with a known technology, tubes usually, but not exclusively, made of PVC, with reinforcement usually, but not exclusively, made of rigid PVC, for uses in the industrial and agricultural sectors.

Said technology envisages extrusion of a strip-like element made of soft material that internally contains an element typically made of rigid PVC.

This strip, still in the semi-molten state, is then wound around an appropriate tool called "spindle", which produces a spiral element, the latter being welded and, once cooled, forming the tube.

The aforesaid tubes may also contain further elements such as substrates made of semi-rigid or rigid materials, which have the function of rendering the inner surface of the tube sleeker and more resistant to abrasion when it is subject to the mechanical action of the elements conveyed therethrough.

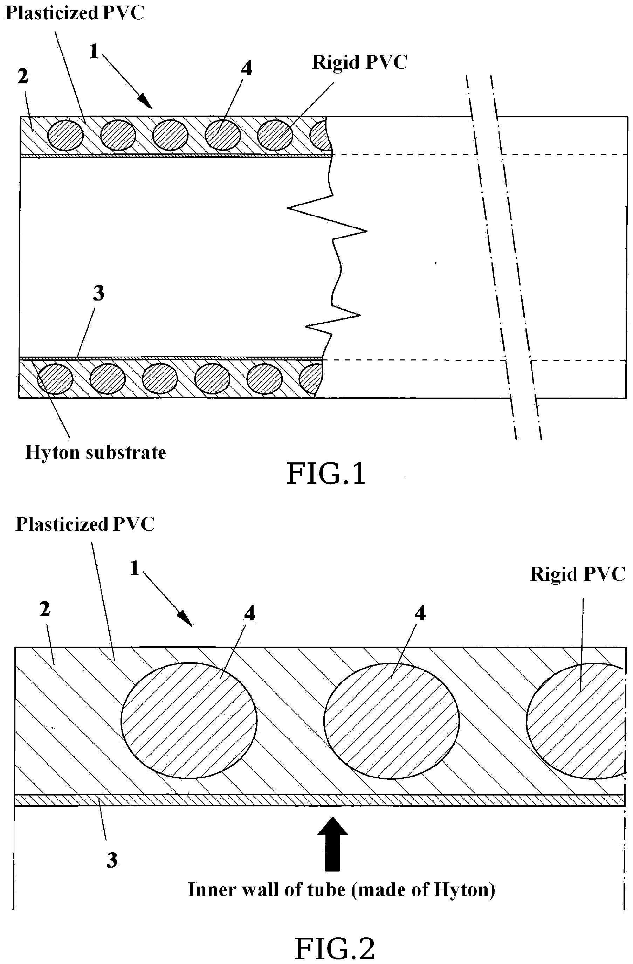

A typical example of the aforesaid tube structure according to the prior art is illustrated in the annexed FIGS. 1 and 2, which show the tube 1 according to the prior art produced by the present Applicant with a substrate 3 made of a material called by the Applicant "HYTON", which is rigid PVC (polyvinyl chloride) that is sleek and anti-abrasive and has a hardness Shore A of 91, and is coupled to the inner wall SI of the tube 1 to increase sleekness thereof.

The tube 1 according to the prior art moreover comprises an outer layer 2 made of plasticized PVC embedded in which are reinforcement elements 4 made of PVC.

A basic drawback of the tube structure 1 according to the prior art is that it has a considerable weight, which, in particular uses, such as in the use on construction sites where said tubes are used as ducts for carrying utilities for the buildings, such as water pipes, electric cables, or gas pipes, represents a major problem, since the heavy weight results in difficult and burdensome handling of the tube especially during the installation phase.

Moreover, using tubes 1 with a large inner diameter, typically, but not exclusively, from 4" to 6", a need that is notably felt by users is to have a light tube that at the same time maintains good characteristics of strength in regard to annular squeezing, since the aforesaid tubes are typically buried.

Document US4343672 discloses a method for producing a plastic tube structure.

### SUMMARY OF THE INVENTION

Thus, the aim of the present invention is to provide a method for producing a lightweight plastic tube that, notwithstanding its light weight, will guarantee strength to compression or annular squeezing required by the end users.

Within the scope of the above mentioned aim, a main object of the present invention is to provide a method of the type referred to that can be implemented by means of already existing equipment, without requiring substantial modifications thereto.

A further object of the present invention is to provide a method of the type referred to, the end product of which, i.e. the lightweight tube, in addition to a significant reduction in weight, likewise presents a cost that is much lower than that of a conventional tube of the same size.

Yet a further object of the present invention is to provide a method of the type referred to designed to enable production of lightweight tubes having an inner surface that is in any case compact and sleek, as well as presenting the aforesaid high strength in regard to annular squeezing.

Yet a further object of the present invention is to provide a method of the type referred to that can make use of conventional plastic materials currently employed for producing commercial reinforced tubes for the applications envisaged, for example plasticized polyvinyl chloride with a reinforcement, preferably but not exclusively, of rigid polyvinyl chloride.

Not the least important object of the present invention is to provide a method of the type referred to that will present a high throughput and will provide lightweight tubes that are without defects and are absolutely safe and reliable in operation.

According to one aspect of the present invention, the aim and objects mentioned above, as well as yet further objects that will emerge more clearly hereinafter, are achieved by a method for producing a lightweight plastic tube structure having the characteristics specified in the independent Claim 1.

According to a further aspect of the present invention, the aim and objects mentioned above are likewise achieved by a lightweight tube structure, in particular for use on construction sites, manufactured by means of the method according to the invention, characterized in that said structure comprises at least an extruded substrate made of non-expanded sleek and anti-abrasive rigid plastic material and an outer layer made of expanded soft plastic material.

### BRIEF DESCRIPTION OF THE DRAWINGS

Further characteristics and advantages of the method according to the present invention and of the lightweight tube produced thereby will emerge more clearly hereinafter from the following detailed description of an embodiment of the method and of the tube itself, which are illustrated by way of indicative but non-limiting example in the annexed drawings, wherein:
FIG. 1, already described, is a schematic cutaway view in longitudinal section illustrating a tube structure made of plasticized PVC and rigid PVC with substrate made of HYTON according to the prior art;
FIG. 2 is a detailed view at a scale larger than that of FIG. 1, which illustrates the layer 2 of plasticized PVC and the inner wall 3 of the tube made of HYTON, as well as the reinforcement elements 4 made of rigid PVC.
FIG. 3 is a schematic view of a possible method for manufacturing the lightweight tube 1', according to the present invention;
FIG. 4 is a cutaway view in longitudinal section illustrating the lightweight tube structure 1' according to the present invention; and
FIG. 5 is a detailed view at a scale larger than that of FIG. 4, of the tube structure 1' according to the invention shown in FIG. 4.

### DESCRIPTION OF THE PREFERRED EMBODIMENTS

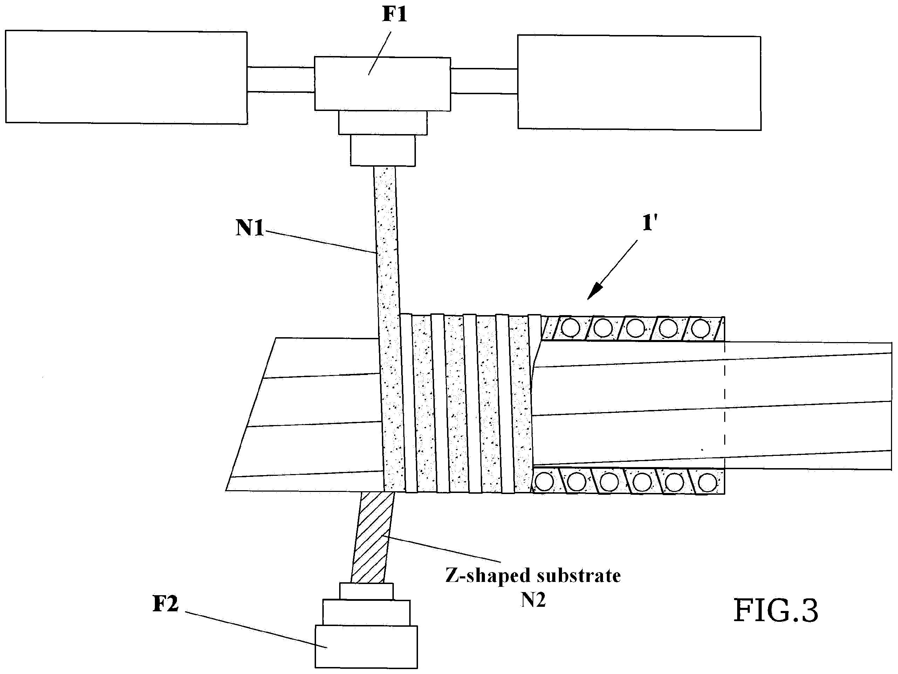

With reference to FIG. 3, illustrated therein is a possible method for the production of the lightweight tube 1', according to the present invention, said method comprising at least the steps of providing two extrusion assemblies F1 and F2 for extruding a first strip-like element N1, for example, in a preferable but non-limiting way, made of plasticized PVC, to which, according to the invention, an expanding additive has been added, and in which preferably non-expanded rigid PVC has, for example, been embedded.

Of course, according to the specific requirements, both the plasticized PVC and the non-expanded rigid PVC may be replaced by any plastic material having similar properties.

As has been said, addition of the expanding additive constitutes a specific aspect of the present invention.

As for the tube 1 of the prior art in FIGS 1 and 2, the strip N1 is made of a soft plastic material, i.e. plasticized polyvinyl chloride (PVC), whereas the expanding additive may be chosen among of a plurality of commercially available expanding additives.

The expanding additive, in the method for the production of the tube 1' according to the invention, is mechanically mixed with the soft plasticized material, whereas it is not added to the rigid plastic material.

The Applicant has found, from thorough practical tests, that the amount of the expanding additive to be added must range between 0.5 wt% and 3 wt% of the plasticized soft material 2.

Thus, with reference to FIG. 3, the invention provides a method for producing a lightweight plastic tube structure 1', in particular for construction sites and industrial and agricultural environments, said tube structure having an inner surface and an outer surface, said method comprising at least the steps of:
a) extruding a starting strip-like element made of soft plastic material;
b) extruding in said element made of soft plastic material a reinforcement substrate made of rigid plastic material, to form an integral complex constituted by the soft strip-like element and the rigid reinforcement element;
c) winding said complex still in a semi-molten state around a spindle element so as to produce a composite spiral tube-forming complex, characterized in that said extrusion step a) includes the auxiliary step a') of introducing into said soft plastic material expanding means designed to expand thermally said soft plastic material so as to confer to said soft plastic material a lightweight porous structure having a specific weight lower than that of said starting strip-like element made of soft plastic material.

To guarantee a good adhesion of the strip N1 (which after addition of the expanding additive will become soft and porous), the method according to the invention also comprises the further step of extending the substrate N2 (Figure 3) not only inside the tube 1', but also along the surface of the strip following a Z-shaped profile, thus assuring an excellent welding of the tube 1' produced.

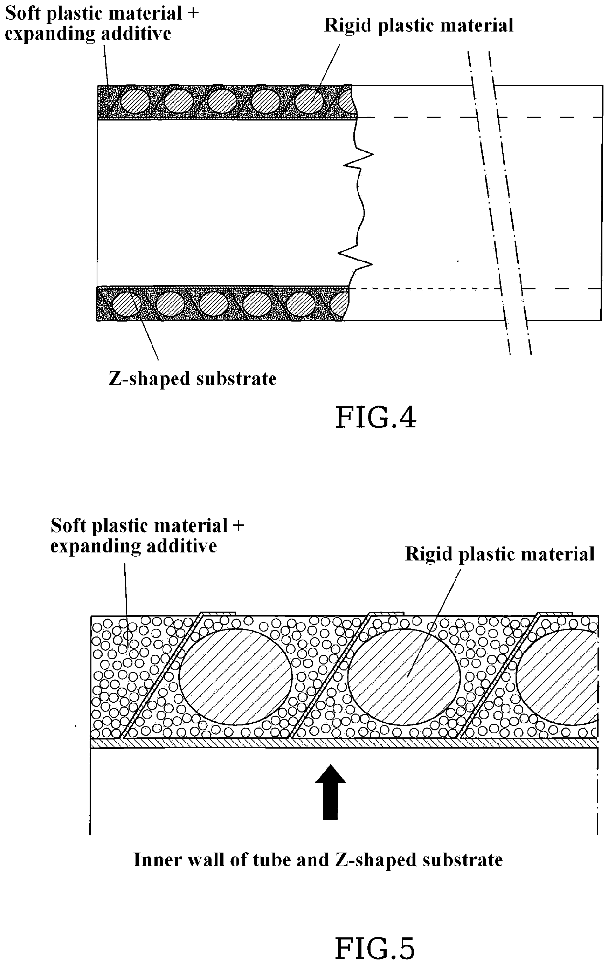

From a comparison of the detailed views of FIG. 2, relating to the tube 1 according to the prior art, and of FIG. 5, relating to the lightweight tube 1' according to the invention, a person skilled in the art may immediately appreciate the new and innovative characteristics of the tube 1' of the present invention, i.e., in the first place, the expanded structure of the outer wall of the tube and, in the second place, the presence with Z-shaped configuration of the substrate on the surface of the strip N1, which provides the advantages referred to.

From the foregoing description, it may be noted how the invention fully achieves the aim and objects pursued.

In fact, the invention provides a method for producing a lightweight tube 1' with a considerable reduction in weight as compared to similar tubes 1 according to the prior art having the same dimensions, this reduction in weight being approximately 20%.

In addition, the tube 1' according to the present invention also has a lower final cost, and moreover has an inner surface that is in any case compact and sleek, as required by the fields of use for which the tube 1' according to the invention has been specifically devised and also has a high strength to annular squeezing, provided by the reinforcement made of rigid plastic material, which, as has been said, is not expanded.

Although the method and the tube structure of the present invention have been described with reference to a specific embodiment thereof, the embodiment described may undergo numerous modifications and variations all of which fall within the scope of the appended claims.

For example, the plastic materials used may be any according to the requirements, even though the ones described are currently preferred.

This means that the PVC and expanding agent described may be replaced by the person skilled in the art, by any other material having the properties indicated, in the light of the teachings of the present invention, without thereby departing from the scope of protection thereof.

## Claims

1. A method for producing a lightweight plastic tube structure, in particular for construction sites and industrial and agricultural environments, said tube having an inner surface and an outer surface, said method comprising at least the steps of:
a) extruding a starting strip-like element made of soft plastic material;
b) extruding simultaneously in said element made of soft plastic material a reinforcement substrate made of rigid plastic material to form an integral complex constituted by the soft strip-like element and the rigid reinforcement substrate;
c) winding said complex constituted by the soft strip-like element and the rigid substrate, still in a semi-molten state, around a spindle element so as to produce a composite spiral tube-forming complex, **characterized in that** said extrusion step a) comprises the auxiliary step a') of introducing by mixing in said soft plastic material expansion additive means designed to expand thermally said soft plastic material so as to confer to said soft plastic material a lightweight porous structure having a specific weight lower than that of said starting strip-like element of soft plastic material.

2. A method according to claim 1, **characterized in that** it comprises the further step of applying said rigid plastic material following a Z-shaped profile not only along said inner surface of said tube, but also along the outer surface of said tube.

3. A method according to claims 1 and 2, **characterized in that** said soft plastic material is plasticized polyvinyl chloride.

4. A method according to claim 3, **characterized in that** said additive expansion means are mechanically mixed with said plasticized polyvinyl chloride in an amount preferably from 0.5 wt% to 3 wt% of said plasticized polyvinyl chloride.

5. A method according to claim 1, **characterized in that** said rigid plastic material is polyvinyl chloride having a hardness Shore A of 91.

6. A lightweight plastic tube structure, in particular for use on construction sites, manufactured by means of the method according to any one of claims 1 to 5, **characterized in that** said structure comprises an extruded substrate made of non-expanded sleek and anti-abrasive rigid material and an outer layer made of expanded soft plastic material.

7. A lightweight plastic tube structure according to claim 1, **characterized in that** said non-expanded rigid material extends with a Z-shaped configuration also along the surface of said second outer layer made of expanded soft plastic material.

8. A lightweight plastic tube structure according to claims 6 and 7, **characterized in that** said non-expanded substrate is constituted by polyvinyl chloride with a hardness Shore A of 91.

9. A lightweight plastic tube structure according to claims 6 and 7, **characterized in that** said outer layer is constituted by plasticized polyvinyl chloride.

## Patentansprüche

1. Verfahren zur Herstellung einer Leichtkunststoff-Rohrstruktur, insbesondere für Baustellen und Industrie- und Landwirtschaftsumgebungen, wobei das Rohr eine Innenoberfläche und eine Außenoberfläche aufweist, wobei das Verfahren mindestens die folgenden Schritte umfasst:
a) Extrudieren eines anfangsstreifenartigen Elements aus weichem Kunststoffmaterial;
b) gleichzeitiges Extrudieren in das Element, das aus weichem Kunststoffmaterial gefertigt ist, eines Verstärkungssubstrats, das aus starrem Kunststoffmaterial gefertigt ist, um einen integralen Komplex zu bilden, der aus dem weichen streifenartigen Element und dem starren Verstärkungssubstrat gebildet ist;
c) Wickeln des Komplexes, der aus dem weichen streifenartigen Element und dem starren Substrat gebildet ist, das sich noch in einem halbgeschmolzenen Zustand befindet, um ein Spindelelement, um einen zusammengesetzten spiralförmigen Rohrbildungskomplex zu erzeugen, **dadurch gekennzeichnet, dass** der Extrusionsschritt a) den Hilfsschritt a') des Einführens, durch Mischen in dem weichen Kunststoffmaterial, von Expansionsadditivmitteln, die ausgelegt sind, das weiche Kunststoffmaterial thermisch zu expandieren, um dem weichen Kunststoffmaterial eine leichte poröse Struktur mit einem spezifischen Gewicht zu verleihen, das niedriger ist als das des anfangsstreifenartigen Elements aus weichem Kunststoffmaterial.

2. Verfahren nach Anspruch 1, **dadurch gekennzeichnet, dass** es den weiteren Schritt des Aufbringens des starren Kunststoffmaterials in Übereinstimmung mit einem Z-förmigen Profil nicht nur entlang der Innenoberfläche des Rohrs, sondern auch entlang der Außenoberfläche des Rohrs umfasst.

3. Verfahren nach den Ansprüchen 1 und 2, **dadurch gekennzeichnet, dass** das weiche Kunststoffmaterial plastifiziertes Polyvinylchlorid ist.

4. Verfahren nach Anspruch 3, **dadurch gekennzeichnet, dass** die Expansionsadditivmittel mechanisch mit dem plastifizierten Polyvinylchlorid in einer Menge von vorzugsweise 0,5 Gew.-% bis 3 Gew.-% des plastifizierten Polyvinylchlorids gemischt werden.

5. Verfahren nach Anspruch 1, **dadurch gekennzeichnet, dass** das starre Kunststoffmaterial Polyvinylchlorid mit einer Shore-A-Härte von 91 ist.

6. Leichtkunststoff-Rohrstruktur, insbesondere zur Verwendung auf Baustellen, die mittels des Verfahrens nach einem der Ansprüche 1 bis 5 hergestellt wird, **dadurch gekennzeichnet, dass** die Struktur ein extrudiertes Substrat aus nicht expandiertem, glattem und abriebfestem starrem Material und eine äußere Schicht aus expandiertem weichen Kunststoff umfasst.

7. Leichtkunststoff-Rohrstruktur nach Anspruch 1, **dadurch gekennzeichnet, dass** sich das nicht expandierte starre Material mit einer Z-förmigen Konfiguration auch entlang der Oberfläche der zweiten äußeren Schicht aus expandiertem weichem Kunststoffmaterial erstreckt.

8. Leichtkunststoff-Rohrstruktur nach Anspruch 6 und 7, **dadurch gekennzeichnet, dass** das nicht expandierte Substrat aus Polyvinylchlorid mit einer Shore-A-Härte von 91 gebildet ist.

9. Leichtkunststoff-Rohrstruktur nach Anspruch 6 und 7, **dadurch gekennzeichnet, dass** das weiche Kunststoffmaterial plastifiziertes Polyvinylchlorid ist.

## Revendications

1. Procédé de fabrication d'une structure de tube en plastique léger, en particulier pour des chantiers de construction et des environnements industriels et agricoles, ledit tube présentant une surface intérieure et une surface extérieure, ledit procédé comprenant au moins les étapes suivantes :
a) extrusion d'un élément de départ du genre bande, constitué d'une matière plastique souple ;
b) extrusion simultanée, dans ledit élément constitué d'une matière plastique souple, d'un substrat de renforcement constitué d'une matière plastique rigide, pour former un complexe intégral constitué de l'élément souple du genre bande et du substrat de renforcement rigide ;
c) enroulement dudit complexe constitué de l'élément souple du genre bande et du substrat rigide, encore dans un état semi-fondu, autour d'un élément de broche, de manière à produire un complexe composite formant un tube en spirale, **caractérisé en ce que** ladite étape d'extrusion a) comprend l'étape auxiliaire a') consistant à introduire, par mélange dans ladite matière plastique souple, des additifs d'expansion conçus pour expanser thermiquement ladite matière plastique souple, de manière à conférer à ladite matière plastique souple une structure poreuse légère présentant un poids spécifique inférieur à celui dudit élément de départ du genre bande constitué d'une matière plastique souple.

2. Procédé selon la revendication 1, **caractérisé en ce que** celui-ci comprend l'étape supplémentaire d'application de ladite matière plastique rigide selon un profil en Z non seulement le long de ladite surface intérieure dudit tube, mais aussi le long de la surface extérieure dudit tube.

3. Procédé selon les revendications 1 et 2, **caractérisé en ce que** ladite matière plastique souple est un chlorure de polyvinyle plastifié.

4. Procédé selon la revendication 3, **caractérisé en ce que** ledit lesdits additifs d'expansion sont mélangés mécaniquement avec ledit chlorure de polyvinyle plastifié dans une quantité de préférence comprise entre 0,5% en poids et 3% en poids dudit chlorure de polyvinyle plastifié.

5. Procédé selon la revendication 1, **caractérisé en ce que** ladite matière plastique rigide est un chlorure de polyvinyle présentant une dureté de Shore A de 91.

6. Structure de tube en plastique léger, en particulier destinée à une utilisation sur des chantiers de construction, fabriquée à l'aide du procédé selon l'une quelconque des revendications 1 à 5, **caractérisée en ce que** ladite structure comprend un substrat extrudé constitué d'une matière rigide non expansée et anti-abrasive et une couche extérieure constituée d'une matière plastique souple expansée.

7. Structure de tube en plastique léger selon la revendication 1, **caractérisée en ce que** ladite matière rigide non expansée s'étend avec une configuration en forme de Z également le long de la surface de ladite deuxième couche extérieure constituée d'une matière plastique souple expansée.

8. Structure de tube en plastique léger selon les revendications 6 et 7, **caractérisée en ce que** ledit substrat non expansé est constitué de chlorure de polyvinyle avec une dureté de Shore A de 91.

9. Structure de tube en plastique léger selon les revendications 6 et 7, **caractérisée en ce que** ladite couche extérieure est constituée de chlorure de polyvinyle plastifié.
